# EUROPÄISCHE PATENTANMELDUNG

(11) **EP 1 840 410 A2**
(43) Veröffentlichungstag der Anmeldung: **03.10.2007**
(21) Anmeldenummer: 07101613.3
(22) Anmeldetag: 02.02.2007
(51) Int. Cl.: F16H 55/14

(54) **Zahnrad**

(30) Priorität: 30.03.2006 DE 102006014763
(71) Anmelder: ROBERT BOSCH GMBH, 70442 Stuttgart (DE)
(72) Erfinder: Fiedler, Max, 77833 Ottersweier-Unzhurst (DE)

(57) **Zusammenfassung**

Die Erfindung betrifft ein Zahnrad (1) mit einem Nabenkörper (4) und einem davon in radialer Richtung beabstandeten ersten Zahnkranzkörper (2). Erfindungsgemäß ist vorgesehen, dass der Nabenkörper (4) zur Drehmomentübertragung über mindestens ein elastisch verformbares erstes Dämpfungselement (9) mit dem Zahnkranzkörper (2) verbunden ist.

## Beschreibung

### Stand der Technik

Die Erfindung betrifft ein Zahnrad gemäß dem Oberbegriff des Anspruchs 1.

In der DE 102 46 711 A1 ist als Stand der Technik ein Zahnrad für eine Getriebevorrichtung, insbesondere für Verstelleinrichtungen in Kraftfahrzeugen beschrieben, das einen aus zwei koaxial zueinander angeordneten Ringwänden gebildeten Zahnkranz aufweist. Der Zahnkranz ist über eine ebene Rückwand sowie drei in Umfangsrichtung beabstandete und in radialer Richtung verlaufende Stege mit einer Nabe verbunden. Von den drei Stegen werden zusammen mit der Nabe, der Rückwand sowie dem Zahnkranz drei in Umfangsrichtung beabstandete Taschen gebildet. In diese werden Dämpfungselemente eingelegt, in die ein Mitnehmer in axialer Richtung eingreift. Die Dämpfungselemente dienen zur Dämpfung von in Umfangsrichtung wirkenden Schwingungen und Stößen. Nachteilig hierbei ist, dass die Dämpfungselemente bei einer Stauchung in Umfangsrichtung bestrebt sind, den Mitnehmer in axialer Richtung aus seiner Eingriffsposition heraus zu verschieben. Weiter kann es zu einem Verklemmen des Mitnehmers in den Dämpfungselementen kommen. Nachteilig ist weiterhin, dass sich der nicht zu vermeidende Schwund der in radialer Richtung verlaufenden Stege beim Abkühlprozess während der Spritzgussfertigung negativ auf die Rundheit des Nabenkanals auswirkt. Hieraus und aus den durch das Vorsehen der radialen Stege verursachten Materialanhäufungen resultieren Gleichlaufschwankungen, die zu einem erhöhten Verschleiß sowie einer erhöhten Geräuschentwicklung führen.

Die DE 102 46 711 A1 schlägt vor, die Dämpfungselemente integral mit dem Mitnehmer auszubilden. Auch bei einer derartigen Lösung mit in Umfangsrichtung wirkenden integralen Federelementen ist das Vorsehen von Radialstegen notwendig, an denen sich die Federelemente abstützen können.

### Offenbarung der Erfindung

Technische Aufgabe

Der Erfindung liegt die Aufgabe zugrunde, ein alternatives Zahnrad mit verbesserten Gleichlaufeigenschaften vorzuschlagen, bei dem durch einfache Maßnahmen in Umfangsrichtung wirkende Stöße und Schwingungen gedämpft werden.

### Technische Lösung

Diese Aufgabe wird mit den Merkmalen des Anspruchs 1 gelöst.

Vorteilhafte Weiterbildungen der Erfindung sind in den Unteransprüchen angegeben.

Der Erfindung liegt der Gedanke zugrunde, den Nabenkörper und den Zahnkranzkörper nicht als einstückiges Bauteil, sondern als zwei separate Bauteile auszubilden. Diese sind erfindungsgemäß über ein elastisches Dämpfungselement miteinander verbunden, über das auch die Drehmomentübertragung zwischen dem Zahnkranzkörper und dem Nabenkörper erfolgt. Aufgrund des elastischen Dämpfungselementes können sich Nabenkörper und Zahnkranzkörper in Umfangsrichtung begrenzt gegeneinander verdrehen, so dass in Umfangsrichtung wirkende Stöße, Schläge und/oder Schwingungen abgepuffert werden. Aufgrund der Erfindung müssen nicht notwendigerweise in radialer Richtung verlaufende Stege zur Bildung von in Umfangsrichtung beabstandeten Taschen zur Aufnahme von Dämpfungselementen vorgesehen werden. Dies hat positive Auswirkungen auf den Gleichlauf des Zahnrades, da Materialanhäufungen und negative Auswirkungen auf die Güte der Rundheit aufgrund des Schwundes von Radialstegen bei der Spritzgussfertigung vermieden werden. Ein weiterer wesentlicher Vorteil der Erfindung besteht darin, dass der Zahnkranz als eigenständiges ringförmiges Bauteil ausgebildet und dementsprechend bezüglich der optimalen Spritzgeometrie ausgelegt werden kann. Hierdurch kann die Fertigungsqualität der Verzahnung des Zahnkranzkörpers wesentlich verbessert werden, wodurch die Haltbarkeit des Zahnrades erhöht und der Gleichlauf eines das Zahnrad enthaltenden Getriebes aufgrund eines exakteren Zahneingriffs verbessert wird. Ferner werden aufgrund des exakteren Zahneingriffs Geräuschentwicklungen reduziert. Über die Wahl der radialen Dicke und/oder des Materials des Zahnkranzes kann die Flexibilität der Verzahnung beeinflusst werden, wodurch wiederum die Eigenschaften des Getriebes, wie Festigkeit, Selbsthemmung und Gleichlauf eingestellt werden können. Aufgrund der Erfindung ist die Position des Dämpfungselementes exakt definiert. Ein Herauslösen aus dieser Position ist aufgrund der festen, stoffschlüssigen Anbindung sowohl an den Zahnkranzkörper als auch an den radial innerhalb liegenden Nabenkörper nicht möglich. Aufgrund der Verlagerung des Dämpfungselementes radial zwischen den Zahnkranzkörper und den Nabenkörper kann die Stützweite des Zahnrades auf einem Lagerbolzen durch eine Verlängerung des Zahnradnabenkanals vergrößert werden, woraus mit Vorteil geringere Taumelbewegungen des Zahnrades auf dem Lagerbolzen sowie Zahnrad-Kippwinkel resultieren.

Die Erfindung bezieht sich sowohl auf Zahnräder, bei denen in dem Nabenkörper ein Nabenkanal zur Aufnahme eines Lagerbolzens oder einer Welle vorgesehen ist als auch auf Zahnräder, die auf andere Weise gelagert sind, bzw. bei denen die Welle auf andere Weise, beispielsweise durch einstückige Ausbildung, mit dem Nabenkörper verbunden ist.

In Weiterbildung der Erfindung ist ein zweiter Zahnkranzkörper vorgesehen. Dieser hat bevorzugt einen von dem ersten Zahnkranzkörper abweichenden Durchmesser. Bevorzugt wird einer der Zahnkranzkörper als Abtriebszahnkranzkörper und der andere Zahnkranzkörper als Antriebszahnkranzkörper genutzt. Erfindungsgemäß ist auch der zweite Zahnkranzkörper als eigenständiges Bauteil ausgebildet und über ein elastisch verformbares Dämpfungselement mit dem Nabenkörper stoffschlüssig verbunden, welches also radial zwischen dem Nabenkörper und dem zweiten Zahnkranzkörper angeordnet. Hierdurch ist sowohl antriebsseitig als auch abtriebsseitig eine Dämpfung in Umfangsrichtung gewährleistet.

Durch eine entsprechende Wahl der Dämpfungselemente können zusätzlich zu der Dämpfung in Umfangsrichtung auch in radialer Richtung und/oder in axialer Richtung wirkende Schwingungen und Stöße gedämpft werden.

Eine Dämpfung in Umfangsrichtung als auch in axialer sowie in radialer Richtung kann durch die Wahl einer Elastomerschicht, insbesondere aus Kunststoff als Dämpfungselement realisiert werden. Mittels der Elastomerschicht werden Nabenkörper und Zahnkranzkörper bevorzugt miteinander in Verbundspritzweise verklebt. Der Grad der Dämpfung kann durch die Wahl des Abstandes der Elastomerschicht zu der Drehachse des Zahnrades und/oder durch Variation der Elastomerschichtdicke eingestellt werden.

Bevorzugt ist zumindest eines der Dämpfungselemente als in Umfangsrichtung geschlossenes Ringelement ausgebildet. Dieses kann beispielsweise kreisringförmig radial zwischen dem Nabenkörper und dem Zahnkranzkörper angeordnet sein. Um jedoch größere Drehmomente übertragen zu können und ein Abreißen des Ringelementes vom Zahnradkörper und/oder vom Nabenkörper zu vermeiden, ist in Weiterbildung der Erfindung vorgesehen, dass der Zahnkranzkörper mit dem Nabenkörper verzahnt ist. Dazu ist jeweils mindestens ein in radialer Richtung weisender Zahn bzw. Verzahnungsabschnitt vorgesehen, die in Umfangsrichtung gegenüberliegen. Zwischen der Verzahnung ist das Dämpfungselement, insbesondere die Elastomerschicht, angeordnet. Diese wird bei in Umfangsrichtung wirkenden Schlägen zwischen jeweils zwei gegenüberliegenden Flanken der Verzahnung gestaucht bzw. gedehnt.

In Ausgestaltung der Erfindung ist vorgesehen, dass das Ringelement in Umfangsrichtung gewellt oder gezackt mit in radialer Richtung verlaufenden ebenen und/oder gekrümmten Flanken ausgebildet ist. Zahnkranzkörper und Nabenkörper sind bevorzugt formkomplementär mit an den Flanken des Ringelementes anliegenden Gegenflanken ausgebildet.

Mit Vorteil sind der Zahnkranzkörper und/oder der Nabenkörper als Spritzgussteile ausgebildet. Es eignen sich insbesondere thermoplastische und/oder duroplastische Materialien. Es ist auch denkbar, den Zahnkranzkörper und/oder den Nabenkörper aus Metall auszubilden, wobei jeweils die zwei Bauteile bevorzugt stoffschlüssig in einem Verbundspritzverfahren mit einer Elastomerschicht miteinander verbunden werden.

Zur Reduzierung eines axialen Verkippens zwischen Zahnkranzkörper und Nabenkörper können sich in axialer Richtung gegenüberliegende Ringabschnitte vorgesehen sein, wobei ein Ringabschnitt an den Zahnkranzkörper und der andere gegenüberliegende Ringkörper an den Nabenkörper angeformt ist. Dazwischen befindet sich das Dämpfungselement.

Der Einsatz des erfindungsgemäßen Zahnrades eignet sich besonders in Getrieben, insbesondere in Schneckengetrieben, vorzugsweise für Verstelleinrichtungen, beispielsweise Fensterhebeeinrichtungen, in Kraftfahrzeugen.

### Kurze Beschreibung der Zeichnungen

Weitere Vorteile und zweckmäßige Ausführungen sind den weiteren Ansprüchen, der Figurenbeschreibung und den Zeichnungen zu entnehmen.

Es zeigen:
Fig. 1 eine perspektivisch geschnittene Darstellung eines Zahnrades mit zwei in radialer Richtung mit jeweils einem Dämpfungselement mit einem Nabenkörper verbundenen Zahnkranzkörpern,
Fig. 2 ein Zahnrad, bei dem in radialer Richtung zwischen einem Zahnradkörper und einem mit diesem in Umfangsrichtung verzahnten Nabenkörper eine Elastomerschicht eingebracht ist und
Fig. 3 eine geschnittene Darstellung eines Zahnrad mit zwei in axialer Richtung beabstandeten, sich radial erstreckenden Ringabsätzen.

### Ausführungsformen der Erfindung

In den Figuren sind gleiche Bauteile und Bauteile mit gleicher Funktion mit den gleichen Bezugszeichen gekennzeichnet.

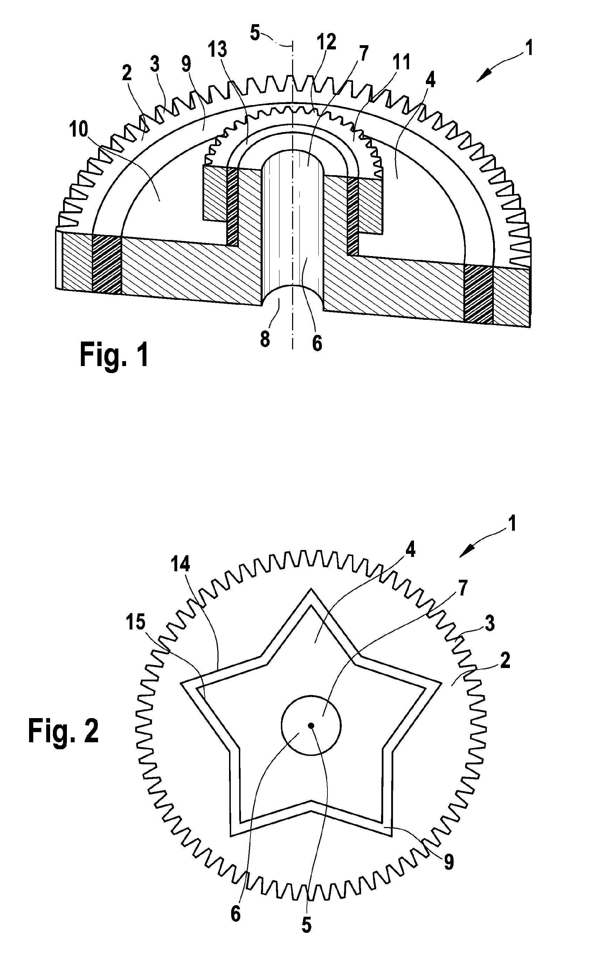

In Fig. 1 ist ein Zahnrad 1 mit einem ersten radial äußeren Zahnkranzkörper 2 mit einer Außenverzahnung 3 sowie einem konzentrisch dazu angeordneten Nabenkörper 4 gezeigt. Koaxial zu der Drehachse 5 des Zahnrades 1 ist in den Nabenkörper 4 ein kreiszylindrischer Nabenkanal 6 mit in diesem Ausführungsbeispiel zwei gegenüberliegenden Öffnungen 7, 8 eingebracht.

Der Nabenkörper 4 ist stoffschlüssig über ein als ringförmige Kunststoff Elastomerschicht ausgebildetes elastisches erstes Dämpfungselement 9 mit dem radial außerhalb angeordneten Zahnkranzkörper 2 verbunden. Das erste Dämpfungselement 9 erstreckt sich in Umfangsrichtung radial zwischen dem Nabenkörper 4 und dem Zahnkranzkörper 2 und hält diese zusammen. Über das erste Dämpfungselement 9 werden Drehmomente zwischen dem Zahnkranzkörper 2 und dem Nabenkörper 4 übertragen. Das erste Dämpfungselement 9 gewährleistet ein begrenztes Verdrehen des Zahnkranzkörpers 2 relativ zu dem Nabenkörper 4 in Umfangsrichtung, wodurch in Umfangsrichtung wirkende Stöße und Schwingungen abgefangen werden können.

Der Nabenkörper 4 verfügt über eine sich in radialer und in Umfangsrichtung erstreckende ebene Verbindungswand 10, die mit ihrem radial äußeren Randbereich mit dem ersten Dämpfungselement 9 verbunden ist. Zur radialen Abstützung sind keine in Umfangsrichtung beabstandete Stege vorgesehen, wodurch die Gleichlaufeigenschaften des Zahnrades 1 gegenüber dem Stand der Technik wesentlich verbessert sind.

Zusätzlich zu dem ersten Zahnkranzkörper 2 ist ein zweiter Zahnkranzkörper 11 mit einer Außenverzahnung 12 vorgesehen. Der Außendurchmesser des zweiten Zahnkranzkörpers 11 ist kleiner als der Außendurchmesser des ersten Zahnkranzkörpers 2. In diesem Ausführungsbeispiel dient der zweite Zahnkranzkörper 11 als Mitnehmer-Zahnkranzkörper und dient als Anschluss an eine Fensterhebemechanik. Da das Zahnrad 1 in diesem Ausführungsbeispiel über den ersten Zahnkranzkörper 2 angetrieben wird, der axial benachbart zu dem zweiten Zahnkranzkörper 11 und koaxial zur Drehachse 5 angeordnet ist, ist der Nabenkanal 6 gegenüber bekannten Zahnrädern verlängert, wodurch die Gleichlaufeigenschaften des Zahnrades 1 weiter verbessert werden.

Radial zwischen dem Nabenkörper 4 und dem zweiten Zahnkranzkörper 11 ist ein ebenfalls als ringförmige Kunststoff-Elastomerschicht ausgebildetes zweites Dämpfungselement 13 vorgesehen, das den zweiten Zahnkranzkörper 11 an den Nabenkörper 4 anbindet. Die Dicke des in Umfangsrichtung geschlossenen ringförmigen zweiten Dämpfungselementes 13 in radialer Richtung ist geringer als die Dicke des ebenfalls umfangsgeschlossenen ersten Dämpfungselementes 9, so dass die Verbindung zwischen Zahnkranzkörper 2 und Nabenkörper 4 "weicher" ist als die Verbindung zwischen dem zweiten Zahnkranzkörper 11 und dem Nabenkörper 4 - identische Materialwahl vorausgesetzt.

In Fig. 2 ist ein Zahnrad 1 schematisch dargestellt. Das Zahnrad 1 weist einen radial äußeren Zahnkranzkörper 2 mit einer Außenverzahnung 3 und einen radial innerhalb angeordneten Nabenkörper 4 mit einem Nabenkanal 6 und einer einzigen Öffnung 7 zum Einführen eines Lagerbolzens auf.

Zahnkranzkörper 2 und Nabenkörper 4 greifen in Umfangsrichtung verzahnungsartig ineinander. Radial zwischen dem Zahnkranzkörper 2 und dem Nabenkörper 4 ist ein als Elastomerschicht ausgebildetes erstes Dämpfungselement 9 angeordnet, das den Zahnradkörper 2 an den Nabenkörper 4 anbindet. Das Dämpfungselement 9 füllt den gezackten Spalt zwischen dem Zahnkranzkörper 2 und dem Nabenkörper 4. Bei in Umfangsrichtung wirkenden Stößen wird das erste Dämpfungselement 9 zwischen den Flanken 14 der Zähne des Zahnkranzkörpers 2 und den den Flanken 14 gegenüberliegenden Flanken 15 der Zähne des Nabenkörpers 4 gestaucht bzw. gedehnt, woraus die Dämpfungswirkung resultiert. Hierdurch wird die maximale Dehnung der Dämpfungsschicht begrenzt, was zu einer längeren Haltbarkeit der Dämpfungsschicht führt. Je nach Ausbildung der Verzahnung können größere oder kleinere Drehmomente zwischen dem Nabenkörper 4 und dem Zahnkranzkörper 2 übertragen werden.

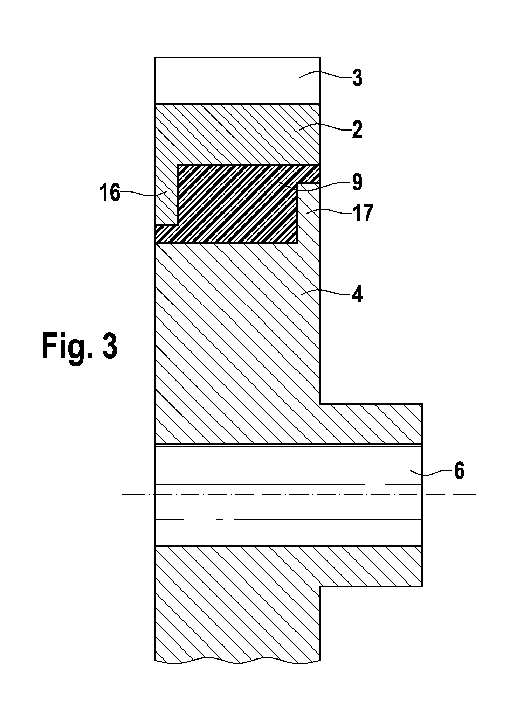

Bei dem in Fig. 3 dargestellten Ausführungsbeispiel sind zwei in axialer Richtung beabstandete, gegenüberliegende in Umfangsrichtung verlaufende Ringabschnitte 16, 17 vorgesehen, wobei der erste Ringabschnitt 16 in radialer Richtung nach innen weisend an den ersten Zahnkranzkörper 2 und der zweite Ringabschnitt 17 in radialer Richtung nach außen weisend an den Nabenkörper 4 angeformt ist. Axial zwischen den Ringabschnitten 16, 17 sowie radial zwischen dem Zahnkranzkörper 2 und dem Nabenkörper 4 befindet sich das als Kunststoff-Elastomerschicht ausgebildete, elastische, erste Dämpfungselement 9. Durch das Vorsehen der Ringabschnitte 16, 17 sind der Nabenkörper 4 und der Zahnkranzkörper 2 nicht nur radial sondern auch axial über das Dämpfungselement 9 stoffschlüssig miteinander verbunden. Durch die beiden Ringabschnitte 16, 17 wird der Grad des Verkippens von Zahnkranzkörper 2 zu Nabenkörper 4 in axialer Richtung reduziert. In dem gezeigten Ausführungsbeispiel ist das Dämpfungselement 9 sowohl in den radialen Spalt zwischen dem Ringabschnitt 16 und dem Nabenkörper 4 als auch in den radialen Spalt zwischen dem Ringabschnitt 17 und dem Zahnkranzkörper 2 eingebracht. Hierauf kann bei Bedarf verzichtet werden.

## Patentansprüche

1. Zahnrad mit einem Nabenkörper (4) und einem davon in radialer Richtung beabstandeten ersten Zahnkranzkörper (2),
**dadurch gekennzeichnet,**
**dass** der Nabenkörper (4) über mindestens ein elastisch verformbares erstes Dämpfungselement (9) mit dem Zahnradkörper (2) verbunden ist.

2. Zahnrad nach Anspruch,
**dadurch gekennzeichnet,**
**dass** das Zahnrad (1) einen von dem Nabenkörper (4) in radialer Richtung beabstandeten zweiten Zahnkranzkörper (11) aufweist, und dass der Nabenkörper (4) über mindestens ein elastisch verformbares zweites Dämpfungselement (13) mit dem zweiten Zahnkranzkörper (11) verbunden ist.

3. Zahnrad nach einem der vorhergehenden Ansprüche,
**dadurch gekennzeichnet,**
**dass** das erste und/oder das zweite Dämpfungselement (9, 13) in radialer und/oder in Umfangsrichtung und/oder in axialer Richtung elastisch verformbar sind/ist.

4. Zahnrad nach einem der Ansprüche 1 bis 3,
**dadurch gekennzeichnet,**
**dass** das erste und/oder das zweite Dämpfungselement (9, 13) als Kunststoff Elastomerschicht ausgebildet sind/ist.

5. Zahnrad nach einem der vorhergehenden Ansprüche,
**dadurch gekennzeichnet,**
**dass** das erste und/oder das zweite Dämpfungselement (9, 13) als in Umfangsrichtung geschlossenes, radial zwischen dem Nabenkörper (3) und dem ersten/zweiten Zahnkranzkörper (2, 11) angeordnetes Ringelement ausgebildet sind/ist.

6. Zahnrad nach Anspruch 5,
**dadurch gekennzeichnet,**
**dass** das der Ringelement kreisringförmig ausgebildet ist.

7. Zahnrad nach Anspruch 5,
**dadurch gekennzeichnet,**
**dass** der erste und/oder zweite Zahnkranzkörper (2, 11) mit dem Nabenkörper (4) verzahnt sind/ist.

8. Zahnrad nach Anspruch 7,
**dadurch gekennzeichnet,**
**dass** das Ringelement in Umfangsrichtung gewellt oder gezackt mit in radialer Richtung verlaufenden ebenen und/oder gekrümmten Flanken ausgebildet ist.

9. Zahnrad nach einem der vorhergehenden Ansprüche,
**dadurch gekennzeichnet,**
**dass** der erste und/oder zweite Zahnkranzkörper (2, 11) und/oder der Nabenkörper (4) als Spritzgussteile ausgebildet sind/ist.

10. Zahnrad nach einem der vorhergehenden Ansprüche,
**dadurch gekennzeichnet,**
**dass** das erste und/oder das zweite Dämpfungselement (9, 13) zwischen zwei in axialer Richtung beabstandeten, sich in radialer Richtung erstreckenden, vorzugsweise umfänglich geschlossenen, Ringabschnitten (16, 17) angeordnet ist.

11. Getriebe, insbesondere für Verstelleinrichtungen in Kraftfahrzeugen, mit einem Zahnrad (1) gemäß einem der vorhergehenden Ansprüche.
